# DEMANDE DE BREVET EUROPEEN

(11) **EP 1 530 392 A1**
(43) Date de publication de la demande: **11.05.2005**
(21) Numéro de dépôt: 03104069.4
(22) Date de dépôt: 04.11.2003
(51) Int. Cl.: H04Q 7/38

(54) **Méthode de gestion de la sécurité d'applications avec un module de sécurité**

(71) Demandeur: Nagracard S.A., 1033 Cheseaux-sur-Lausanne (CH); Swisscom Mobile AG, 3050 Bern (CH)
(72) Inventeur: Ksontini, Rached, 1004, Lausanne (CH); Cantini, Renato, 1782, Belfaux (CH)
(74) Mandataire: Wenger, Joel-Théophile

(57) **Abrégé**

Le but de la présente invention est de proposer une méthode de gestion de la sécurité d'applications installées dans un appareil afin de limiter les risques liés au fait qu'un module de sécurité soit utilisé à mauvais escient par un appareil non autorisé ou non homologué.

Ce but est atteint par une méthode de gestion de la sécurité d'applications avec un module de sécurité inséré dans un appareil connecté à un réseau, ledit réseau étant connecté à un serveur de contrôle d'un opérateur de réseau, lesdites applications installées dans une mémoire de l'appareil utilisent des ressources, constituées de données ou de fonctions, stockées dans le module de sécurité, cette méthode est caractérisée en ce qu'elle comprend les étapes suivantes:
- réception de données comprenant l'identification de l'appareil et celle du module de sécurité, via le réseau, par le serveur de contrôle.
- analyse et vérification par le serveur de contrôle desdites données,
- génération d'un cryptogramme à partir du résultat de la vérification sur lesdites données,
- transmission du cryptogramme, via le réseau, par le serveur de contrôle à l'appareil,
- transmission dudit cryptogramme par l'appareil au module de sécurité,
- vérification dudit cryptogramme par le module de sécurité
- libération, respectivement blocage, de certaines ressources du module de sécurité selon le résultat de la vérification du cryptogramme.

## Description

La présente invention concerne le domaine de la téléphonie mobile appelée aussi téléphonie cellulaire. Elle concerne plus particulièrement la gestion de la sécurité des applications mises en oeuvre avec un module de sécurité associé à un équipement mobile de téléphonie mobile.

Le module de sécurité d'un téléphone mobile ou portable est connu sous l'appellation "carte SIM" (Subscriber Identity Module) constituant l'élément central de la sécurité de ces téléphones. L'opérateur de téléphonie introduit, à la fabrication et/ou lors d'une phase de personnalisation, un numéro appelé IMSI (International Mobile Subscriber Identification) servant à identifier d'une manière sûre et unique chaque abonné désirant se connecter sur un réseau mobile. De plus, chaque téléphone mobile, appelé équipement mobile ci-après, est identifié par un numéro unique stocké dans une mémoire non volatile de l'équipement mobile. Ce numéro, appelé IMEI, (International Mobile Equipment Identifier) sert à identifier un équipement mobile donné sur un réseau du type GSM (Global System for Mobile communications), GPRS (General Packet Radio System) ou UMTS (Universal Mobile Télécommunications System). Le même concept d'identification s'applique également au WLAN (Wireless LAN) ou au câble TV bidirectionnel. L'identifiant peut être une adresse MAC (Media Access Control) qui correspond à l'adresse unique identifiant la configuration du matériel d'un utilisateur sur un réseau.

Les normes ETSI ("European Télécommunications Standards Institute"), définissent une station mobile (MS, mobile station) composée d'un équipement mobile (ME, mobile equipment) et d'un module d'abonné (SIM, subscriber identity module). Ce module d'abonné est en général amovible c'est-à-dire qu'elle peut être soit retirée soit transférée d'un équipement mobile à un autre.

Lors de la mise en service d'un équipement mobile, plus particulièrement lors de sa connexion au réseau d'un opérateur, des informations comprenant les données d'identification sont échangées entre l'équipement mobile et le centre de gestion de l'opérateur qui autorise ou non son utilisation. Actuellement un équipement mobile offre à l'utilisateur, en plus de sa fonction usuelle d'établissement de conversations téléphoniques, l'utilisation de nombreux autres services supplémentaires tels que la consultation de diverses informations, les opérations bancaires à distance, le commerce électronique, etc. Ces services évolués nécessitent un niveau de sécurité de plus en plus élevé afin de prémunir les utilisateurs contre les fraudes éventuelles causées par des tiers.

Une vérification devient donc nécessaire au moins à deux niveaux: d'une part au niveau de l'équipement mobile lui-même et d'autre part à celui des applications logicielles permettant le fonctionnement des différents services proposés par l'opérateur ou par des partenaires autorisés. Il s'agit de garantir que le module d'abonné fonctionne seulement avec un équipement mobile dûment autorisé ou homologué par l'opérateur ou par l'émetteur de carte. Par fonctionnement du module d'abonné, on entend sa capacité de permettre l'utilisation de services sollicités par un utilisateur en exécutant un certain nombre d'applications logicielles préalablement installées dans une mémoire de l'équipement mobile et qui se servent du module d'abonné comme moyen de protection.

Ces applications exécutées dans l'équipement mobile utilisent des ressources disponibles dans le module d'abonné. Par ressources, on entend diverses fonctions et données nécessaires au bon fonctionnement d'une application. Certaines de ces ressources peuvent être communes à plusieurs applications, notamment les fonctions liées à la sécurité. Le module d'abonné peut ainsi bloquer ou plutôt rendre inutilisables certaines applications dont les paramètres de sécurité ou les droits de l'utilisateur sont insuffisants.

Le but de la présente invention est de proposer une méthode de gestion de la sécurité de l'ensemble équipement mobile, module d'abonné, applications afin de limiter les risques liés au fait qu'un module d'abonné soit utilisé à mauvais escient par des applications exécutées sur un équipement mobile non autorisé ou non homologué.

Un autre but est de protéger l'utilisateur de l'équipement mobile ainsi que les fournisseurs d'applications concernés contre les abus résultants d'un clonage de l'équipement mobile et/ou du module d'abonné.

Ces buts sont atteints par une méthode de gestion de la sécurité d'applications fonctionnant dans un équipement mobile connecté à un réseau, ledit réseau étant administré par le serveur de contrôle d'un opérateur, lesdites applications utilisant des ressources stockées dans un module de sécurité relié localement audit équipement mobile, cette méthode comprenant les étapes suivantes:
- transmission au serveur de contrôle de données comprenant l'identification de l'équipement mobile et celle du module de sécurité,
- analyse et vérification par le serveur de contrôle desdites données,
- génération d'un cryptogramme à partir du résultat de la vérification sur lesdites données,
- transmission du cryptogramme, via le réseau, par le serveur de contrôle à l'équipement mobile,
- transmission dudit cryptogramme par l'équipement mobile au module de sécurité,
- vérification dudit cryptogramme par le module de sécurité
- libération, respectivement blocage, de certaines ressources du module de sécurité selon le résultat de la vérification du cryptogramme.

Les ressources du module d'abonné sont bloquées de manière ciblée, ceci dans le but de rendre certaines applications inutilisables. On ne bloque pas directement des applications de l'équipement mobile: on agit de manière indirecte sur les applications, c'est-à-dire que l'effet de blocage va se manifester uniquement lorsque l'équipement mobile essaiera d'exécuter ces applications.

Cette méthode s'applique de préférence à la téléphonie mobile. Par conséquent, l'appareil est un équipement mobile téléphonique et le module de sécurité un module d'abonné. Cet ensemble se connecte à un réseau mobile du type GSM (Global System for Mobile communications), GPRS (General Packet Radio System), UMTS (Universal Mobile Télécommunications System), WLAN (Wireless Local Area Network) ou autre, géré par un serveur de contrôle d'un opérateur. Des applications logicielles sont installées dans l'équipement mobile et configurées de manière à utiliser des ressources (données ou fonctions) présentes dans le module d'abonné. Elles ne peuvent donc être utilisées dans leur intégrité seulement si les conditions de sécurités sont satisfaites selon des critères préétablis par l'opérateur ou le fournisseur d'applications. Cette vérification des critères est à la charge du module de sécurité qui peut laisser libre ou bloquer l'accès à des ressources nécessaires au bon fonctionnement d'une application installée dans l'équipement mobile.

Les données de ces ressources peuvent comprendre des informations tels que numéro de comptes, des programmes (sous forme de code pouvant être installé dans l'équipement mobile), des clés d'encryption/décryption, des droits d'accès à du contenu, etc.

Les fonctions de ces ressources peuvent comprendre des algorithmes cryptographiques, des processus de vérification, des processus de génération de signatures digitales, des processus d'encryptage, des processus d'authentification, des processus de validation de données, des processus de contrôle d'accès, des processus de sauvegarde de données, des processus de paiement etc.

Le serveur de contrôle joue un rôle essentiel en gérant les éléments de confiance ou de sécurité liés à l'ensemble équipement mobile / module abonné. Il interprète les données qui lui sont transmises par l'équipement mobile afin de contrôler ou limiter l'utilisation d'applications, fonctions ou ressources disponibles au moyen du module d'abonné.

Le serveur recevant les informations d'identité d'un équipement mobile et de son module d'abonné et comprenant I'IMEI et I'IMSI décide, selon certains critères, si une nouvelle instruction doit être envoyée au module d'abonné pour redéfinir un nouveau profil de protection définissant les ressources du module d'abonné pouvant être utilisées par les applications exécutées dans l'équipement mobile. Les critères peuvent se référer, par exemple, à la période de mise à jour du profil de protection, au nombre de connexions au réseau, à la technologie utilisée pour l'accès au réseau, l'identité du réseau d'accès utilisé. Ils sont également liés à différents risques associés au matériel ou aux logiciels utilisés que l'opérateur et/ou le fournisseur d'applications et/ou l'abonné désirent prendre en compte.

La méthode selon l'invention s'exécute généralement lors de chaque connexion de l'équipement mobile au réseau. Selon une variante, elle peut être exécutée périodiquement à un rythme donné par le serveur de contrôle ou lors de chaque démarrage d'une application sur l'équipement mobile. Selon une autre variante, le module d'abonné ne va pas recevoir un nouveau message du centre de contrôle tant que le numéro de l'équipement mobile IMEI demeure inchangé.

Lors de l'enclenchement du module d'abonné, il est préférable de bloquer un certain nombre de ressources jusqu'à l'arrivée du cryptogramme. Ainsi, si l'équipement mobile veut intercepter le cryptogramme et ne pas le transmettre au module abonné, tout ou partie des données ou fonctions des ressources du module d'abonné ne seront pas disponibles pour les applications exécutées dans l'équipement mobile. Selon le type de réalisation, il est possible que certaines ressources du module d'abonné utilisées par des applications d'un bas niveau de sécurité, soient mises en fonction par défaut avant l'arrivée du cryptogramme. Ceci est également le cas pour des ressources nécessaires à l'obtention de l'accès au réseau, sans quoi l'envoi du cryptogramme ne serait pas possible par ce même réseau.

Lorsque le module d'abonné vérifie la validité du cryptogramme, il identifie aussi de manière indirecte l'équipement mobile et s'assure que les données viennent effectivement du serveur de contrôle. Autrement dit, par ce cryptogramme, le serveur de contrôle donne implicitement l'assurance au module d'abonné que l'identificateur de l'équipement mobile a été pris en compte avant de transmettre des instructions au module abonné. Ces dernières sont, de ce fait, chargées, le cas échéant, de donner ou refuser l'autorisation d'utilisation complète ou partielle des applications de l'équipement mobile.

L'équipement mobile joue un rôle de relais dans cette étape de vérification en établissant un dialogue quasi direct entre le module d'abonné et le serveur de contrôle. Ainsi la sécurité des messages échangés est assurée de bout en bout entre le serveur de contrôle et le module d'abonné via l'environnement d'exécution des applications mises en oeuvre sur l'équipement mobile. Celui-ci ne peut donc pas "tricher" ou transformer les données vis-à-vis du module d'abonné.

L'invention sera mieux comprise grâce à la description détaillée qui va suivre et qui se réfère aux figures annexées données à titre d'exemple nullement limitatif, à savoir:
- La figure 1 illustre un schéma bloc montrant les différentes parties de l'équipement mobile et du serveur mises à contribution lors de l'échange des données d'identification et du cryptogramme.
- La figure 2 représente un schéma bloc de l'ensemble équipement mobile / module abonné avec les interactions entre les différentes parties lors du fonctionnement d'une application.

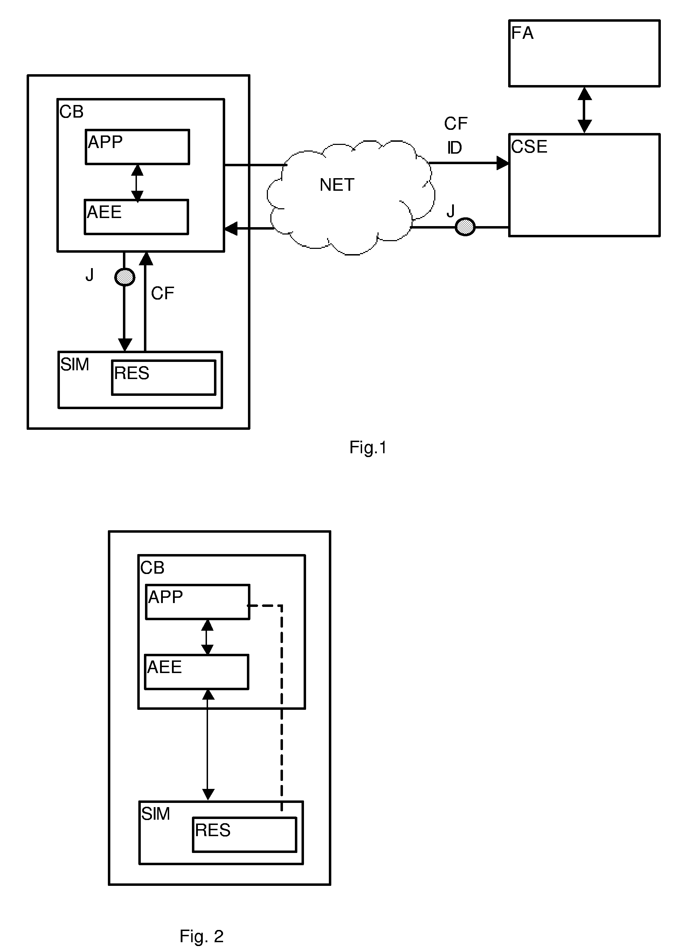

La figure 1 montre l'ensemble équipement mobile (CB) et module d'abonné (SIM) qui transmet via un réseau mobile (NET) des données d'identification (ID) que le serveur de contrôle (CSE) vérifie. Ce dernier renvoie un cryptogramme (J) vers le module d'abonné via l'équipement mobile (CB). L'équipement mobile (CB) inclut une ou plusieurs applications logicielles (APP) fonctionnant dans un environnement d'exécution (AEE). Ces applications proviennent soit d'un fournisseur d'applications (FA) associé au serveur de contrôle (CSE) de l'opérateur, soit elles sont programmées d'origine par le fabricant de l'équipement mobile.

Le module d'abonné inclut des ressources (RES) utilisées par les applications logicielles (APP).

La figure 2 montre que le fonctionnement des applications (APP) de l'équipement mobile (CB) dépend directement des ressources (RES) disponibles dans le module d'abonné. En l'absence de ressources adéquates, l'application peut, soit ne pas démarrer, soit fonctionner de façon très limitée avec des paramètres par défaut pouvant générer des messages d'erreur invitant l'utilisateur à accomplir des actions correctives nécessaires comme changer déquipement mobile (CB) ou de module d'abonné (SIM).

L'équipement mobile (CB) s'identifie, par exemple lors de chaque requête de connexion au réseau, au serveur de contrôle (CSE) via le réseau mobile (NET) en transmettant de préférence un code propre à un équipement mobile: IMEI (International Mobile Equipment Identity) et un code propre à un module d'abonné: IMSI (International Mobile Subscriber Identity). Le premier numéro IMEI est une suite de 15 chiffres contenant notamment un code d'homologation du fabricant de l'équipement mobile et un numéro de série définissant l'équipement mobile téléphonique de manière unique. Le second numéro IMSI est aussi une suite de 15 chiffres et comprend un code attribué par l'opérateur auprès duquel un utilisateur a souscrit un abonnement permettant d'identifier un abonné de manière unique.

Lors de l'identification d'un équipement mobile, le serveur de contrôle (CSE) analyse et vérifie les données (ID) transmises en les confrontant avec le contenu d'une liste noire (données à rejeter) ou d'une liste blanche (données acceptées). Une base de données permet d'affiner, si nécessaire, l'identification d'un abonné et de déterminer ses particularités telles que services autorisés, paiements de l'abonnement et/ou des services effectués ou non, période d'abonnement, profil de sécurité associé à l'équipement mobile utilisé, etc. Les résultats de cette vérification sont ensuite utilisés dans le but de déterminer un cryptogramme, appelé jeton (J), que le serveur de contrôle (CSE) transmet à l'équipement mobile (CB). Il est à noter que le serveur de contrôle (CSE) peut être distinct de l'opérateur mobile et la requête provenant d'un équipement mobile sera acheminée vers cette autorité de contrôle.

L'environnement d'exécution d'applications (AEE) de l'équipement mobile (CB) transmet le jeton (J) tel quel, sans l'altérer, au module d'abonné, l'équipement mobile (CB) jouant un rôle de relais uniquement.

Si le jeton (J) est valable, le module d'abonné peut libérer, respectivement bloquer certaines ressources (RES). La ou les applications (APP) peuvent ainsi s'exécuter selon les critères imposés par le serveur de contrôle (CSE). En effet, le jeton (J) inclut ou est accompagné d'instructions particulières à destination du module d'abonné qui peuvent conditionner le fonctionnement de l'une ou l'autre des applications (APP) de l'équipement mobile (CB). Par exemple l'exécution de transactions financières peut être limitée lorsque l'abonné se trouve être connecté à un autre réseau que celui auprès duquel il est abonné, par exemple dans un pays différent de celui de son domicile (roaming) en raison de certains critères de sécurité ou de préférences de l'abonné ou de préférences du fournisseur du service financier ou de contraintes légales en vigueur dans le pays en question. Dans un autre cas, lorsqu'un module d'abonné est inséré dans un équipement mobile (CB) non reconnu par l'opérateur, le jeton (J) retourné par le serveur de contrôle (CSE) peut bloquer des ressources (RES) du module d'abonné et, de ce fait empêcher, l'exécution de ou des applications (APP).

Dans le cas d'un possible clonage de l'équipement mobile (CB) et/ou du module d'abonné, les résultats de la vérification avec la base de données comporteront des instructions dépendant des risques que l'opérateur accepte de prendre avec des téléphones mobiles clonés. Par exemple, le jeton (J) généré en conséquence peut soit bloquer toutes les ressources (RES) du module d'abonné, soit limiter leur utilisation dans le temps et/ou créer un message d'avertissement à l'abonné via l'environnement d'exécution des applications (AEE).

Le jeton (J) peut être par exemple associé à une signature générée à l'aide d'une clé privée RSA, (Rivest, Shamir, Adelman) K_{RSA_Pri} à partir d'un ensemble de données contenant, par exemple, l'IMSI, l'IMEI, les références des ressources du module d'abonné, un compteur. Cette clé ne serait connue que du serveur de contrôle, alors que sa partie publique K_{RSA_Pub} serait connue du module d'abonné. L'avantage de l'utilisation de clés asymétriques réside en ce que la clé servant à créer des signatures ne se trouve pas à l'extérieur du serveur de contrôle (CSE).

Bien entendu, d'autres algorithmes à clés asymétriques tels que par exemple DSA (Digital Signature Algorithm), et ECC (Elliptic Curve Cryptography) peuvent constituer des alternatives à RSA.

L'usage d'algorithme à clés symétriques peut être préféré pour des raisons de simplicité, de rapidité des vérifications ou de coûts de fabrication et de mise en oeuvre plus faibles. Dans ce cas, la clé serait connue du serveur (CSE) et du module d'abonné, par exemple un algorithme IDEA (International Data Encryption Algorithm) pourrait être utilisé pour signer l'ensemble (IMSI, IMEI, références des ressources da le module d'abonné, compteur). Comme alternative à l'algorithme IDEA, des algorithmes tels que, par exemple, TDES (Triple Data Encryption Standard) et AES (Advanced Encryption Standard) peuvent aussi être utilisés.

Dans ces deux variantes à clés asymétriques et symétriques, le module d'abonné vérifie la concordance des différents champs apparaissant dans le jeton (J), notamment elle contrôle le compteur (CPT) en le comparant avec un compteur correspondant mémorisé dans la carte qui est régulièrement maintenu à jour. Ce compteur permet d'éviter le double usage d'un même jeton (J) adressé au module d'abonné afin d'empêcher une attaque par répétition (replay attack).

Une variante au compteur est d'utiliser un aléa (nombre aléatoire) généré par le module d'abonné. Cet aléa est transmis avec les données envoyées au serveur de contrôle. Ce dernier renvoie cet aléa dans le cryptogramme de réponse et le module d'abonné peut vérifier qu'il s'agit bien d'un nouveau message. Plus généralement, afin d'éviter tout risque d'usage d'un ancien cryptogramme, ce dernier comprend une variable prédictible par le module d'abonné, soit un compteur ou un aléa.

Le module d'abonné considère aussi les références des ressources (RES) dont il autorise ou non l'utilisation par les applications exécutées dans l'équipement mobile (CB).

Le module d'abonné ne connaît pas en tant que telle les références d'applications (APP) installées dans l'équipement mobile. En effet, certaines applications plus globales possèdent une interface relativement ouverte qui leur permet d'être utilisées par n'importe quelles applications secondaires externes. Par exemple, sur une application générale de paiement peuvent se greffer des applications particulières en fonction du mode de paiement utilisé. Le module d'abonné ne peut se baser que sur les références de ses propres ressources (RES) (données ou fonctions). En acceptant les risques liés à un équipement mobile, l'opérateur fait un choix en sachant quelles ressources (RES) du module d'abonné sont utilisées par quelle(s) application(s) (APP) exécutées dans l'équipement mobile (CB).

Dans une autre variante la signature faite à l'aide d'une clé du type RSA ou IDEA peut être remplacée par un bloc généré avec une clé partagée HMAC (Keyed-Hashing for Message Authentication) à partir de l'ensemble (IMSI, IMEI, références de ressources du module d'abonné, compteur). HMAC est un mécanisme pour l'authentification de messages par l'utilisation de fonctions de hachage cryptographiques telles que MD5 (Message Digest) ou SHA-1 (Secure Hash Algorithm), en combinaison avec une clé partagée c'est-à-dire que la même clé se trouve dans le serveur de contrôle (CSE) et dans le module d'abonné.

Cette clé présente à la fois dans le serveur de contrôle (CSE) et dans le module d'abonné peut être chargée lors de la personnalisation du module d'abonné ou lors de l'installation de certaines ressources dans le module d'abonné. Selon les options, à chaque ressource ou groupe de ressources du module d'abonné peut être associée une clé différente, ou la clé peut être globale pour l'ensemble des ressources et unique pour un module d'abonné donné.

Pour plus de sécurité, lorsque le module d'abonné a reçu un jeton (J), il peut retransmettre au serveur de contrôle (CSE), via l'équipement mobile (CB) et le réseau mobile (NET), un message de confirmation (CF) attestant la bonne réception et le traitement adéquat du jeton (J) par le module d'abonné. La confirmation (CF) comprend au moins un code de succès ou d'erreur de l'opération ainsi qu'un compteur, similaire à celui du jeton (J), servant à la protection contre les attaques par répétition. Ce message permet aussi au serveur de contrôle (CSE) de tenir à jour le compteur associé au module d'abonné.

Dans une variante de l'invention, l'équipement mobile peut être remplacé par un appareil non mobile tel qu'un décodeur de télévision à péage ou un ordinateur. Le serveur de contrôle reçoit de la part d'un module de sécurité, l'équivalent du module d'abonné, l'identifiant de l'appareil connecté au réseau et l'identifiant du module de sécurité. En réponse, le serveur effectue les vérifications telles que décrites plus haut et renvoie un cryptogramme au module de sécurité. Cette réponse va libérer ou bloquer des ressources dans le module de sécurité.

## Revendications

1. Méthode de gestion de la sécurité d'applications (APP) fonctionnant dans un appareil (CB) connecté à un réseau (NET), ledit réseau étant connecté à un serveur de contrôle (CSE), lesdites applications utilisant des ressources (RES) stockées dans un module de sécurité (SIM) relié localement audit appareil (CB), cette méthode comprenant les étapes suivantes:
• transmission au serveur de contrôle (CSE) des données (ID) comprenant l'identification de l'appareil (IMEI) et l'identification (IMSI) du module de sécurité,
• analyse et vérification par le serveur de contrôle (CSE) desdites données (ID),
• génération d'un cryptogramme (J) dont la teneur dépend du résultat de la vérification sur lesdites données,
• transmission du cryptogramme (J) par le serveur de contrôle (CSE) à l'appareil (CB),
• transmission dudit cryptogramme (J) par l'appareil (CB) au module de sécurité (SIM),
• vérification dudit cryptogramme (J) par le module de sécurité (SIM),
• libération, respectivement blocage, de certaines ressources (RES) du module de sécurité (SIM) selon le résultat de la vérification du cryptogramme (J).

2. Méthode selon la revendication 1, **caractérisée en ce que** l'appareil (CB) est un équipement mobile de téléphonie mobile.

3. Méthode selon la revendication 2, **caractérisée en ce que** le réseau est un réseau mobile du type GSM, GPRS ou UMTS ou WLAN.

4. Méthode selon les revendications 2 et 3, **caractérisée en ce que** le module de sécurité (SIM) est un module d'abonné inséré dans l'équipement mobile de téléphonie mobile de type carte SIM.

5. Méthode selon les revendications 1 à 4, **caractérisée en ce que** l'identification de l'ensemble équipement mobile / module d'abonné (SIM) est effectuée à partir du numéro d'identification unique de l'équipement mobile (IMEI) et du numéro d'identification du module d'abonné (IMSI) propre à un abonné au réseau mobile.

6. Méthode selon la revendication 1 **caractérisée en ce que** le cryptogramme (J) reçu par le module de sécurité (SIM) conditionne l'utilisation des ressources (RES) du module de sécurité (SIM) par les applications (APP) exécutées dans l'équipement mobile (CB) selon des critères préétablis par l'opérateur et/ou le fournisseur d'applications et/ou l'abonné.

7. Méthode selon la revendication 6, **caractérisée en ce que** les critères définissent des limites d'utilisation d'une application (APP) selon des risques associés au logiciel de ladite application (APP) ou au matériel de l'équipement mobile que l'opérateur et/ou le fournisseur d'applications et/ou l'abonné désirent prendre en compte.

8. Méthode selon les revendications 1 à 7, **caractérisée en ce qu'**elle s'exécute lors de chaque connexion de l'équipement mobile au réseau.

9. Méthode selon les revendications 1 à 7, **caractérisée en ce qu'**elle s'exécute périodiquement à un rythme donné par le serveur de contrôle.

10. Méthode selon les revendications 1 à 7, **caractérisée en ce qu'**elle s'exécute lors de chaque démarrage d'une application sur l'équipement mobile.

11. Méthode selon l'une des revendications précédentes, **caractérisée en ce que** le module d'abonné (SIM), préalablement à l'exécution des instructions données par le cryptogramme (J), compare l'identifiant de l'équipement mobile (IMEI) avec celui précédemment reçu et initie l'opération de vérification seulement si l'identifiant (IMEI) a changé.

12. Méthode selon l'une des revendications précédentes, **caractérisée en ce que** le serveur de contrôle (CSE), préalablement à la transmission du cryptogramme (J), compare l'identifiant de l'équipement mobile (IMEI) avec celui précédemment reçu et initie l'opération de vérification seulement si l'identifiant (IMEI) a changé.

13. Méthode selon les revendications 1 à 12, **caractérisée en ce que** le cryptogramme (J) est constitué par un message encrypté par le serveur de contrôle (CSE) à l'aide d'une clé d'encryption asymétrique ou symétrique à partir d'un ensemble de données contenant, entre autres données, le numéro d'identification unique de l'équipement mobile (IMEI), le numéro d'identification du module d'abonné (IMSI), des références de ressources (RES) du module d'abonné (SIM) et une variable prédictible (CPT).

14. Méthode selon les revendications 1 à 13 **caractérisée en ce que** le module d'abonné transmet au serveur de contrôle (CSE), via l'équipement mobile (CB) et le réseau mobile (NET), un message de confirmation (CF) lorsque le module abonné (SIM) a reçu le cryptogramme (J), ledit message attestant la bonne réception et le traitement adéquat du cryptogramme (J) par le module d'abonné (SIM).

15. Méthode selon la revendication 1, **caractérisée en ce que** l'appareil est un décodeur de télévision à péage ou un ordinateur auquel est connecté le module de sécu rité.

16. Module de sécurité comprenant des ressources (RES) destinées à être localement accédées par un appareil (CB) relié à un réseau, ce module comprenant des moyens de lecture de l'identifiant (IMEI) de l'appareil (CB) et des moyens pour transmettre un message comprenant l'identifiant (IMEI) de l'appareil et l'identifiant (IMSI) du module de sécurité, **caractérisé en ce qu'**il comprend des moyens pour recevoir un cryptogramme (J) contenant des informations permettant de libérer ou bloquer certaines ressources (RES).

17. Module de sécurité selon la revendication 16, **caractérisé en ce qu'**il est du type "carte SIM" destiné à être relié à un équipement mobile.
